# EUROPEAN PATENT APPLICATION

(11) **EP 2 184 865 A2**
(43) Date of publication of application: **12.05.2010**
(21) Application number: 09175609.8
(22) Date of filing: 10.11.2009
(51) Int. Cl.: H04B 7/185

(54) **Device for distributing locally information received from at least one satellite, system thereof**

(30) Priority: 10.11.2008 US 112986 P; 13.02.2009 FR 0900683
(71) Applicant: Archos, 91430 Igny (FR)
(72) Inventor: Gilbert, Jérôme, 92300, ORSAY (FR)
(74) Representative: Pontet, Bernard

(57) **Abstract**

The invention relates to means for receiving and exploiting satellite and/or terrestrial broadcasted signals in vehicles of all types and in buildings. A device according to the invention distributes locally the signals to terminals for use inside a vehicle or deep inside a building.

## Description

### TECHNICAL FIELD

The invention relates to means for receiving and exploiting satellite and/or terrestrial broadcasted signals in vehicles of all types and in buildings.

### BACKGROUND OF THE INVENTION

The U.S. published patent application US2008/0146147 discloses a method and a system for receiving radio broadcasted by satellite, it is in the technological background. The U.S. published patent application US2008/0268838 discloses a system for mobile interactive services that mainly target to provide interactivity.

### SUMMARY OF THE INVENTION

The invention aims to solve or alleviate one or more of the problems associated with the prior art solutions. Preferred embodiments of the invention allow users to enjoy satellite based services deeper inside buildings or inside all types of vehicles like cars, mobile homes, bus, trucks, boats... Moreover, the preferred embodiments of the invention provide an easy to install and an easy to use solution that suits better than prior art to consumer and DIY markets. The invention suits particularly well but not exclusively to broadcast systems which mix satellite and terrestrial means. For example it takes benefits from new mobile TV standards like DVB-SHA and DVB-SHB. In addition, the system according to the invention allows potentially the exploitation of more than one service on more than one device within the vehicle. By separating information reception and delivery and service consumption, the invention allows to individualize fully or partly the information delivery and/or the access to a service. In the preferred embodiment of the invention, it can go up to a fully personal approach where each passenger, the driver and even the car itself may have its own access to the service.
The devices for exploiting the services in the frame of the invention can be standard electronic apparatus featuring a simple WiFi connection for example. A software plug-in approach offers a convenient way of adapting standard devices to the requirement of the invention.

The invention concerns a device for exploiting locally information based on signals received from at least one satellite, this device preferably comprising:
- at least one means for receiving satellite signals; and
- at least one means for receiving terrestrial signals; and
- at least one short range radio link; and
- electronic subassembly operatively connected to the items above and connected to a source of energy.

In the device according to the invention, the at least one means for receiving satellite signals can be in relation or be arranged for being in relation with satellite television broadcast.

In the device according to the invention, the at least one means for receiving satellite signals can be based on diversity.

In the device according to the invention, the at least one means for receiving satellite signals can be in relation or be arranged for being in relation with satellite radio broadcast.

In the device according to the invention, the at least one means for receiving satellite signals can be in relation or be arranged for being in relation with satellite positioning system.

In the device according to the invention, the at least one means for receiving terrestrial signals can be arranged for receiving the same information than broadcasted by the satellite in order to allow reception where the satellite signal is not available.

In the device according to the invention, the at least one means for receiving terrestrial signals can use or be arranged for using diversity.

In the device according to the invention, the at least one means for receiving terrestrial can share the same antennas than the at least one means for receiving satellite signals.

In the device according to the invention, the shared antennas can suit both to circular polarized signals coming from satellite and to linear polarized signals coming from terrestrial emitter.

In the device according to the invention, the at least one short range radio link can be or can comprise a bidirectional packet transmission subsystem.

In the device according to the invention, the bidirectional packet transmission subsystem can offer or be arranged for offering access point facilities.

In the device according to the invention, the bidirectional packet transmission subsystem can work or be arranged for working in unicast mode.

In the device according to the invention, the bidirectional packet transmission subsystem can work or be arranged for working in multicast mode.

In the device according to the invention, the bidirectional packet transmission subsystem can carry or be arranged for carrying a plurality of information channels.

In the device according to the invention, the at least one short range radio link can be or can comprise a radio transmitter for reproducing the sound through the standard audio car system.

In the device according to the invention, the said electronic subassembly can be embedded in the same housing than the antennas.

In the device according to the invention, the said electronic subassembly can be embedded in a different housing than the antennas.

In device according to the invention, the antenna of the at least one short range radio link can be located outside the device.

In the device according to the invention, the antenna can be placed inside the vehicle.

In the device according to the invention, the antenna can be part of the power supply cable.

In the device according to the invention, the said source of energy to which the electronic subassembly is connected can be external to the device.

In the device according to the invention, the said source of energy to which the electronic subassembly is connected can be embedded in the device.

In the device according to the invention where the source of energy is embedded in the device, the embedded source of energy can be based on at least one battery.

In the device according to the invention that embeds at least one battery, the at least one battery can be recharged or be arranged for being recharged by solar cells, and the device according to the invention can comprise these solar cells.

In the device according to the invention that embeds at least one battery, the at least one battery can be recharged or be arranged for being recharged by a generator which uses the energy of the wind, and the device according to the invention can comprise this generator using the energy of the wind.

In the device according to the invention that embeds at least one battery, the at least one battery can be recharged or be arranged for being recharged by a generator which uses kinetic energy, and the device according to the invention can comprise this generator using kinetic energy.

The device according to the invention can further comprise a transmitter for sending information to the satellite.

The device according to the invention can further comprise removable means for fastening it on the roof of a vehicle.

The device according to the invention that comprises removable means for fastening it on the roof of a vehicle can further comprise a means for locking and unlocking the fastening.

The device according to the invention that comprises removable means can further comprise a means for easily unfastening the device.

The device according to the invention can further comprise a means for identifying the device through a unique code.

The device according to the invention can further comprise a means for identifying the location of the device.

The device according to the invention can further comprise a means for identifying the real time and date.

The device according to the invention can further comprise a transponder feature for sending information as an answer to a request.

In the device according to the invention, the said information sent as an answer to a request can contain at least the said device identifying and information about location and real time if available.

The device according to the invention can be arranged such that, unfastening it from its base can trigger sending at least the said device identifying and information about location and real time if available.

The device according to the invention can further comprise the capability to receive and interpret service locking and unlocking remote commands or being arranged for receiving and interpreting service locking and unlocking remote commands.

The device according to the invention can be enabled for interacting with at least one external system for automatically associating an action to the detection of the presence of the device.

The device according to the invention can further comprise an optional cover which has a shape and a surface on which the snow does not stick, the cover being elastically fastened to the device and having a mass in order to produce vibrations and movements in the normal course of the vehicle use, these vibration and movements helping the removal of the snow.

According to another aspect of the invention, is a system for providing services based on satellite inside a transport means or inside a building that preferably comprises:
- a device for exploiting locally information based on signals received from at least one satellite; and
- at least one electronic device enabled for receiving and decoding the signal coming from the short range radio link of the said device for exploiting locally information based on signals received from at least one satellite.

In the system according to of the invention, the at least one electronic device enabled for receiving and decoding the signal can further comprise means for being connected to a cellular radio network. This capability to be connected to a wireless telephone network can be implemented directly or indirectly. Directly meaning that the device of the invention embeds a wireless modem (e.g. HSDPA or above). Indirectly means that the connectivity with the telephone network is achieved through a regular telephone by an intermediary connection (e.g. tethering by a Bluetooth connection).

In the system according to the invention, the at least one electronic device enabled for receiving and decoding the signal can further comprise at least one application for delivering specific services.

In the system according to the invention, the at least one application for delivering specific services can be or can comprise a television application including at least commands for selecting the displayed channel.

In the system according to the invention, the at least one application for delivering specific services can be or can comprise a radio application including at least commands for selecting the station.

In the system according to the invention, the at least one application for delivering specific services can be related to navigation.

In the system according to the invention, the at least one application for delivering specific services can be related to emergency.

In the system according to the invention, the at least one application for delivering specific services can be related to navigation.

The system according to the invention can further comprise a connection to the vehicle or to the building security system for transmitting an alarm through the device for exploiting locally information based on signals received from at least one satellite.

The device according to the invention, for exploiting, through at least one terminal, at least one service in relation with information received, and in some cases transmitted, by radiofrequency preferably comprises:
- at least one means for receiving, and in some cases transmit, information by radiofrequency ; and
- at least one short or medium range wireless communication means; and
- one electronic subassembly comprising at least one microprocessor connected to the means above and to an electrical power source.

In the device according to the invention, the at least one means for receiving, and possibly transmit, information by radiofrequency can implement or be arranged for implementing at least one diversity scheme.

The device according to the invention can further comprise at least one conditional access means for accessing protected contents like for example premium television channels.

This feature also allows for example to condition the access to services offered for subscription or being granted after a transaction. The means of conditional access may be based on querying information on a remote server or on resources available locally insiside the device of the invention or in connection with it through for example its wireless short or medium range communication means. It may be, for example by detecting a terminal, itself associated with such rights fixing conditions of service access or a connected smart / SIM card reader. It can be based on the detection of the presence of a cellular phone that carries its own means for granting the access to some services. Of course any other means like entering a code on a device in relation with the system of the invention, using any type of biometric reader is in the ambit of the invention. The conditional access means provided by the invention may also be used in the frame of a parental control for filtering access to services or contents that may be problematic for children.

In the device according to the invention, the at least one short or medium range wireless communication means can transmit or be arranged for transmitting a plurality of structured information streams.

In the device according to the invention, the at least one short or medium range wireless communication means can:
- transmit or be arranged for transmitting at least one information in relation with a plurality of possible choices,
- receive or be arranged for receiving at least one command for selecting one choice among the plurality of possible choices and
- transmit or be arranged for transmitting a stream of structured information in relation with the choice done.

The system according to the invention, for exploiting, through at least one terminal, at least one service in relation with information received, and possibly transmitted, by radiofrequency preferably comprises:
- a device of the invention as recited above; and
- at least one terminal capable of receiving, and in some cases for transmitting, information respectively from and to the device of the invention as recited above.

The method according to the invention for exploiting, through at least one terminal, at least one service in relation with information received, and possibly transmitted, by radiofrequency preferably comprises:
- a step of selection by the user of a service to be exploited among a plurality of services proposed through the at least one terminal ; and
- a step of delivery of the service chosen by the user.

In the method according to the invention, the step of delivery of the service chosen by the user can comprise:
- a sub-step of unitary stream extraction that corresponds to the selected service inside a multiplexed comprising other data in relation with at least one other service; and
- a sub-step of exploitation of the data of the said unitary stream that correspond to the selected service inside the at least one terminal for providing the selected service.

The method according to the invention can have a variant wherein the sub-step of said unitary stream extraction is executed inside the device of the invention as recited above.

The method according to the invention can have a variant wherein the sub-step of said unitary stream extraction is executed inside the at least one terminal.

The system according to the invention as recited above can be for use for receiving digital television on at least one terminal inside and/or near a transportation means and/or a building.

The system according to the invention as recited above can be for use for being connected to Internet on at least one terminal inside and/or near a transportation means and/or a building.

### BRIEF DESCRIPTION OF THE DRAWINGS

FIG. 1 depicts a typical embodiment of the invention for a car; it could be any other type of vehicle.
FIG. 2 depicts the good propagation of waves inside the vehicle even with the antenna above the roof.
FIG. 3 depicts propagation of waves inside the vehicle when the antenna is located inside.
FIG. 4 depicts another solution for radiating and/or collecting waves inside the vehicle associated to the power supply cable.
FIG. 5 depicts an implementation of the device according to the invention where the antenna subassembly and the electronics are spited.
FIG. 6 depicts the top view of an implementation of the device according to the invention.
FIG. 7 depicts the view of the cut of the implementation of Fig. 6.
FIG. 8 depicts an implementation where wipe antennas are added for better receiving terrestrial signals through diversity.
FIG. 9 depicts a cut along the main axis of Fig. 8
FIG. 10 depicts the device according to the invention with magnetic pads for fastening it on the roof of a vehicle.
FIG. 11 depicts a variant using multipolar magnet arrangement with a moving armature associated to a key mechanism for an easy and secure locking and unlocking of the fastening of the divice.
FIG. 12 depicts an improvement based on a screw, the inflating of a poach or any other means for un fastening the device more easily without risk of damage for the surface on which it is.
FIG. 13 depicts a way for fastening securely the device through screws inserted by the top. Special slots intend to make unfastening impossible or possible only with a special tool.
FIG. 14 depicts another way for fastening the device, the screws being inserted by bellow.
FIG. 15 depicts a two parts implementation of the device of the invention.
FIG. 16 depicts an embodiment of the invention that aims to be autonomous. It is based on the use of embedded batteries for powering the device.
FIG. 17 depicts a variant where the autonomy is increased by the possible contribution of solar cells.
FIG. 18 depicts a variant where the autonomy is increased by the possible contribution of a kinetic generator that converts any sudden variation of speed of the vehicle in energy.
FIG. 19 depicts a variant where the autonomy is increased by the possible contribution of a kinetic generator that converts any sudden variation of speed of the vehicle in energy. Autonomy is also increased by the use of the wind particularly efficient for stabilized speed travels.
FIG. 20 depicts an anti snow cap. It is a special removable cover to be installed in winter over the device. Its abrupt shape and the elastically attached mass that shake at each movement of the vehicle remove automatically the snow from above the antennas.
FIG. 21 shows an outdoor application of the system according to the invention implemented in a car.
FIG. 22 shows another application of the invention that aims to allow deep indoor reception of broadcasted services.

### DETAILED DESCRIPTION OF THE INVENTION AND OF THE DRAWINGS

Other advantages and characteristics of the invention will appear upon examination of the detailed description of embodiments which are no way limitative, and of the drawings.

The invention is based on a device which receives and possibly transmits various radiofrequency signals. This device is acting like a bridge between external radiofrequency entities like satellite, terrestrial networks and a local radiofrequency network for use by various terminals inside a vehicle or a inside a building where reception is poor or impossible.

The device 1 according to the invention for exploiting locally the information based on signals received from at least one satellite (on a low earth 3 or on a geostationary orbit 2) comprises:
- At least one means for receiving satellite signals; and
- At least one means for receiving terrestrial signals; and
- At least one short range radio link; and
- Electronic subassembly operatively connected to the items above and connected to a source of energy.

At least one means for receiving satellite signals is in relation with satellite television broadcast, satellite radio broadcast or satellite positioning system.
At least one means for receiving satellite signals is advantageously based on diversity at least of order 2 but preferably diversity of order 4.

At least one means for receiving terrestrial signals is for receiving the same information than broadcasted by the satellite in order to allow reception where the satellite signal is not available. This capability of terrestrial repeaters which help the reception in "canyon" situation (e.g. in towns) is supported by transmission standards like DVB-SHA and DVB-SH.

Diversity of antennas and receiving path with signal recombination improve significantly the sensitivity of the reception means also terrestrial signals.

Some types of antennas like helix antennas offer the capability to use the same antenna in both satellite and terrestrial modes.

These antennas offer a circular polarization for signals coming from above (i.e. from satellite) and offer a linear polarization for signals coming from terrestrial emitters.

The sharing of the same antenna for both use case is particularly valuable when the DVB-SHA standard is implemented for maximizing both the polarization and the diversity gains

At least one short range radio link is a bidirectional packet transmission subsystem, for example based on 802.11x standard (WiFi) The bidirectional packet transmission subsystem offers access point facilities for an easy connection of any standard device.

The bidirectional packet transmission subsystem may works in unicast mode but it requests more bandwidth.

The bidirectional packet transmission subsystem works advantageously in multicast mode.

The bidirectional packet transmission subsystem carries a plurality of information channels. It is particularly advantageous to transmit a multiplexed stream in which several channels are located, thus each individual terminal may demultiplex the stream in order to exploit the channel of interest among those which are transmitted.

When a GPS or GALILEO positioning system head is implemented in the device as "At least one means for receiving satellite signals", it is particularly interesting to multiplex the positioning data inside the transmitted stream, thus one can use one or more devices running a navigation or any other location dependant application while other devices exploits other channels for mobile television or radio services.

Even if the invention is capable of providing individual services trough the multiplexing, one can choose to exploit the same channel inside the vehicle or inside the building. This may be needed for high quality video that requests almost all the available bandwidth of the transmitter. It may be particularly suitable in the case of the use of relatively large screens. When the same radio or television program is shared by everybody in the vehicle, then it is advantageous to deliver the corresponding sound through the embedded vehicle sound system. It can be made simply by using an additional radio transmitter in the device according to the invention. It can be for example a analog FM stereo transmitter working in the range of the car radio, the general sound being one more "station". In modern car system it could be a digital radio transmitter or a Bluetooth link that is normally for use with cellular phones.
The device according to the invention is preferably a one piece apparatus but one stay in the scope of the invention if different parts or subassemblies are located in separated boxes. For example the antennas to be installed on the roof of a vehicle, or just beside a window in a building, can be separated from the main electronics bloc and also if necessary it can be separated from the distribution antenna.

The antenna of the at least one short range radio link is outside the device.
Astonishingly, when the distribution antenna is located in the device which is fastened on the top of the roof of a vehicle, the propagation of the waves inside the vehicle is not particularly attenuated. This makes possible a compact and fully external design for the device according to the invention.

In more sophisticated implementations, the distribution antenna is located inside the vehicle. A lower emitting power can then be achieved in this case. Another advantage is the increase robustness of one given system against possible other RF emissions in the vicinity that may disturb the service or at least it can reduce the effective bit rate.

For relatively light installations, the distribution antenna can be included in a portion of the power supply cable.

It can be an advantageous option when the said source of energy to which the electronic subassembly is connected is external to the device (e.g. plugged instead of a cigarette lighter).

In one of the most preferred implementation of the invention, the said source of energy to which the electronic subassembly is connected is embedded in the device. It can be based on one or more embedded batteries sized for giving the wished number of hours of service.

It could be particularly advantageous to increase autonomy by using complementary source of energy for charging the battery or at least for allowing a discharging it less quickly. Possible complementary sources of energy can be solar cells, conversion of the energy of the wind or conversion of kinetic energy.

A combination of these means is interesting as their efficiency correspond to different use cases. For example a kinetic generator will give a high contribution in town where the vehicle is continuously braking and accelerating. During long travels at a stabilized speed, e.g. driving on a motorway, a generator using the power of the wind gives its greatest contribution.

A transmitter for sending information to the satellite can be added in the device according to the invention. It can be for example a standard GSM "SAT" modem that may be used in case of emergency

The device can comprise removable means for fastening it on the roof of a vehicle. This implementation is interesting because no hole has to be done in the car. It can be magnetic pads of a surface giving a secure fastening. An improvement can be added with multipolar magnet assembly with a moving armature, advantageously associated to a key. This solution allows locking and unlocking of the fastening without needing the application of a high stroke and without any risk of damage for the surface of the roof.

Means for easily unfastening the device can be also added for applying strength on a large surface for avoiding damage on the surface of the roof. It can be a solution based on a lever, on a screw, needing a tool or not...

The device advantageously comprises a means for identifying the device through a unique code. It is particularly interesting in the frame of antitheft function but also for safety services, for localizing the vehicle, for paying automatically the tolls...

It is also advantageous to add a capability for get the position of the device by an embedded GPS/GALILEO reception head.

The real time and date information can be also useful in the frame of numerous services. It can be achieved by an embedded RTC and/or by decoding time stamps in the received signals.

A transponder feature for sending information like identification code, positioning data and eventually local time when a request is received is a useful function in the frame of various services.

Sending this information to a dedicated service provider, through a satellite call or through a call made directly or indirectly through a cellular telephone network, when the device is unfastened from its base, is an interesting antitheft solution.

The device further comprising capability to receive and interpret service locking and unlocking remote commands.

The device is further enabled for interacting with at least one external system for automatically associating an action to the detection of the presence of the device. It may concern for example automatic toll payment, automatic parking access and/or payment

In winter, the snow may disturb the transmissions, particularly in the range of 2GHz. The invention includes an optional cover which has a shape (e.g. abrupt) and a surface (e.g. sleek and advantageously water repelling treated) on which the snow does not stick, the cover being elastically fastened to the device and having a mass in order to produce vibrations and movements in the normal course of the vehicle use, these vibration and movements helping the continuous and automatic removal of the snow.

The system according to the invention, for providing services based on satellite inside a transport means or inside a building, comprises:
- A device **1** for exploiting locally information based on signals received from at least one satellite; and
- At least one electronic device **6** enabled for receiving and decoding the signal coming from the short range radio link of the said device for exploiting locally information based on signals received from at least one satellite.

The system wherein the at least one electronic device enabled for receiving and decoding the signal may comprise means for being connected to a cellular radio network (e.g. HSDPA or higher). Thus, this device may be used by the system as a gateway with a cellular network. It gives a capability for a mobile connection to the Internet with its associated services (e.g. web browsing, mail clients...)

The system wherein the at least one electronic device enabled for receiving and decoding the signal comprises at least one application for delivering specific services. It can be a television or a radio application including at least commands for selecting the displayed channel or station.
A navigation application or a fleet management application can be advantageously provided in the electronic device for making use of the positioning data.

A SOS or any other emergency related function may be advantageously added in al least one of the electronic product

The system further comprises a connection to the vehicle or to the building security system for transmitting an alarm through the device for exploiting locally information based on signals received from at least one satellite.

The invention is particularly intended to be used for the provision of services in the non-exhaustive list follows: television, radio, Internet access, telephony, location-based, guided, tour assistance, payment of travel fees and / or parking, warning Emergency etc. Those services can be provided alone or in combination, on at least one fixed terminal or mobile in and / or proximity to a conveyance and / or building.

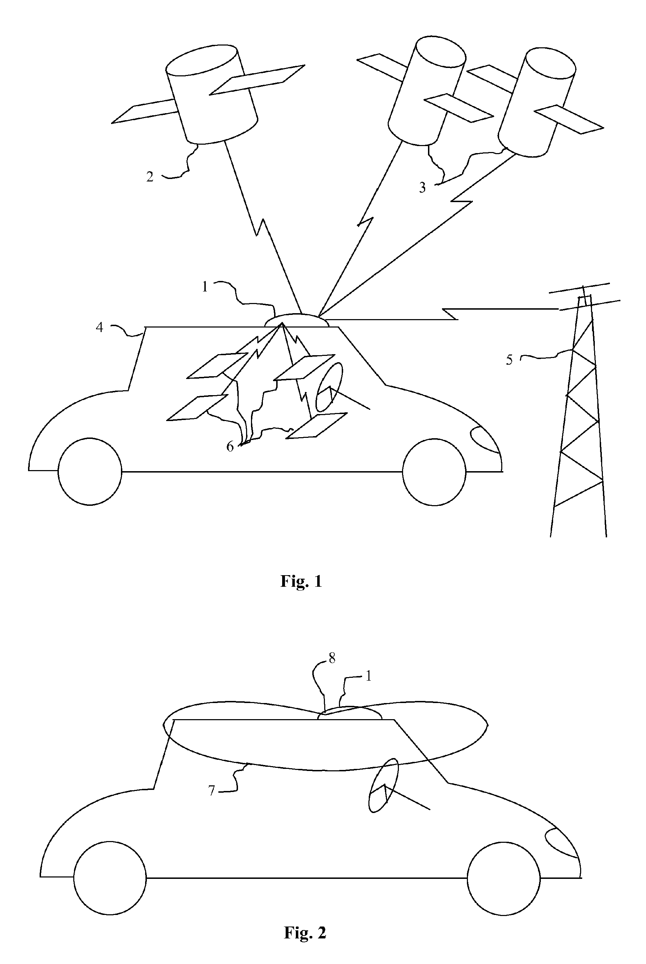

**FIG. 1** shows the standard use of the invention inside a car. The device 1 according to the invention is placed on the roof of the car 4 that is the ideal place for its horizontality, its open view and for the plane metallic surface that makes a ground plane for improving reception. In this example, the device implements means for receiving signals broadcasted by satellite 2, signals emitted by satellite 3 in the frame of a positioning service and also signals broadcasted by terrestrial means 5. Of course, we stay in the scope of the invention if only one of these means is implemented or if any other combination of these means. A plurality of terminals 6 is advantageously implemented of delivering services on an individualized basis.
**FIG. 2** depicts the favorable propagation of radiofrequency waves 7 even inside the vehicle when the antenna 8 of the short or medium range communication means of the device 1 is placed on the roof.

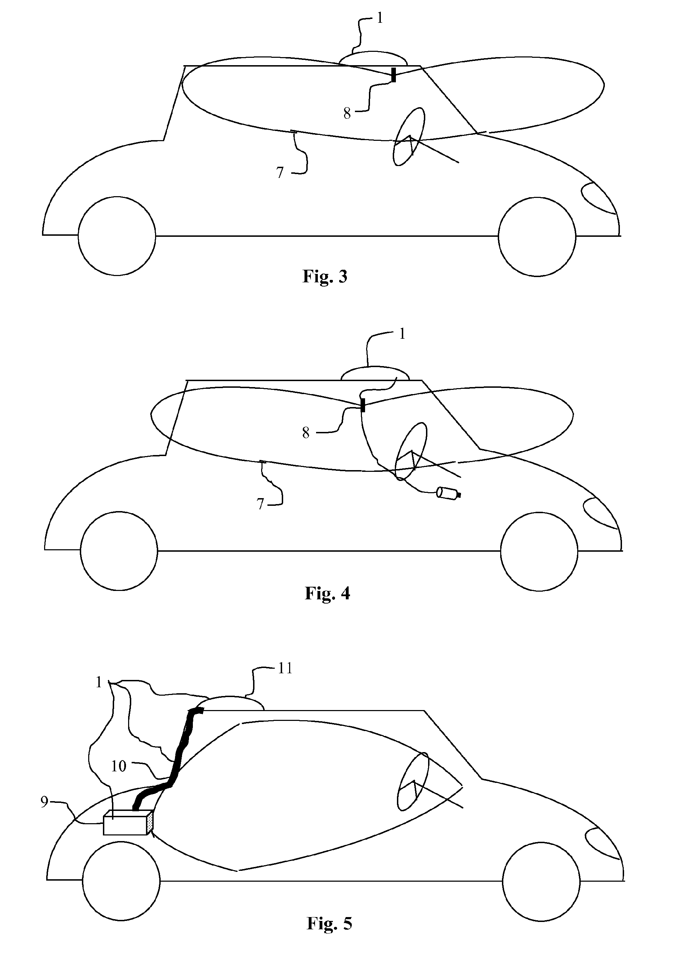

**FIG. 3** depicts the favorable propagation of radiofrequency waves 7 even inside the vehicle when the antenna 8 of the short or medium range communication means of the device 1 is placed inside the car.
**FIG. 4** depicts the favorable propagation of radiofrequency waves 7 even inside the vehicle when the antenna 8 of the short or medium range communication means of the device 1 is combined with the power supply cable for radiating and/or for receiving waves inside the vehicle. This case correspond to an implementation of the invention that is easily removable, advantageously fastened on the roof by magnetic means and supplied by a cable plugged on a lightener socket.
**FIG. 5** shows a device of the invention 1 where the subassemblies antenna 11 and electronics 9 are split and connected together by suitable wire means 10. Of course the subassemblies constitutive of the device of the invention can be split or grouped in any combination according to implementation constraints.

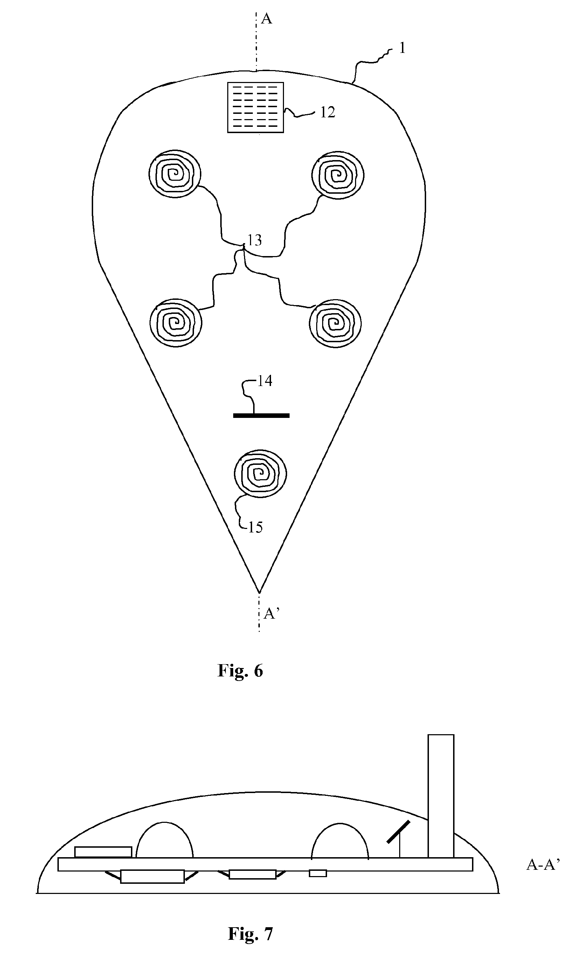

**FIG. 6** shows a top view of an implementation of the device of the invention 1 comprising a system for receiving television signals and/or radio signals broadcasted by satellite through an order 4 diversity scheme with hemispherical helicoidal antennas 13, short or medium range communication with their own antenna 14, a return path by satellite with its antenna 15 and a patch antenna 12 for receiving signals in the frame of a positioning service. For example the implementation of DVB-SHA standard in the S band allows the reception of signals broadcasted by satellite and signals broadcasted by terrestrial means as well through the same antenna 13.
**FIG. 7** shows a cut view of the implementation of FIG. 6.

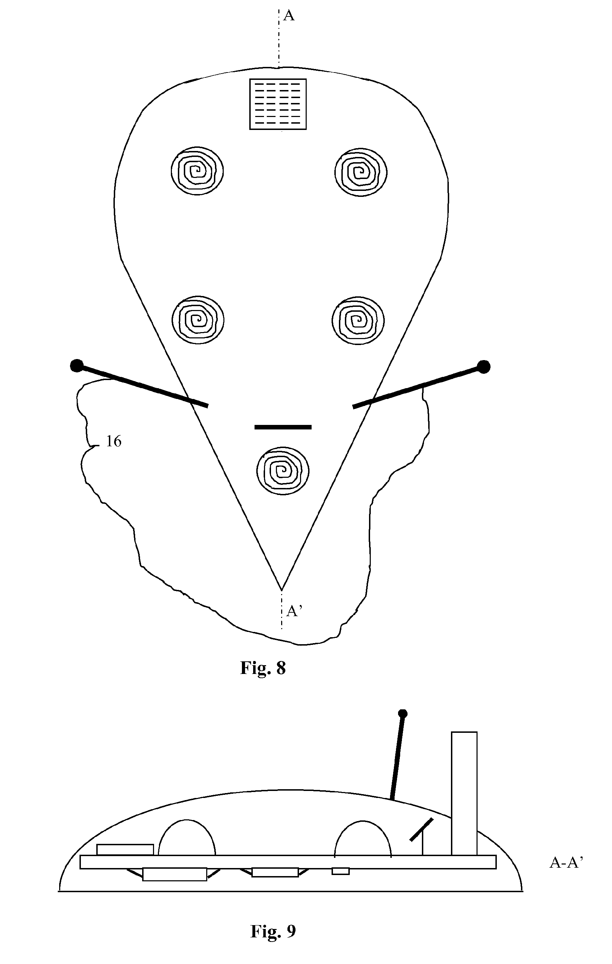

**FIG. 8** shows the implementation of whip antennas 16 for receiving signals broadcasted by terrestrial means for example in UHF in diversity of order 2.
**FIG. 9** shows a cut view along the principal axis of the view of FIG. 8.

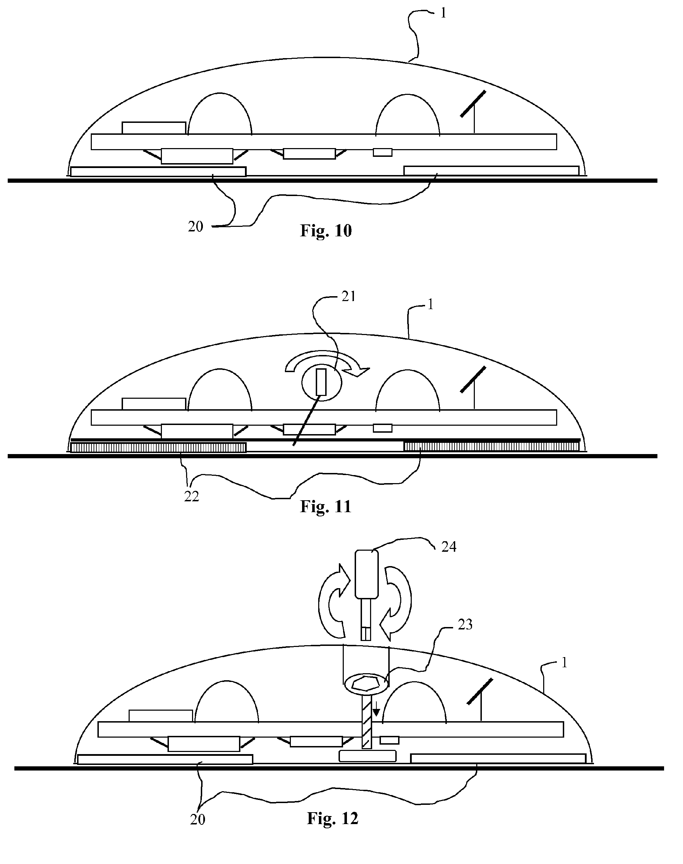

**FIG. 10** shows an implementation of the invention where the device 1 is fastened on the roof by magnets 20.
**FIG. 11** depicts a secure system based on magnets for fastened the device of the invention 1. A lock 21 that needs a specific key drives an assembly 22 of mobile multipolar magnets for taking two positions corresponding to lock and unlock positions. The strength being maximal for a secure fastening in the lock position and a no or weak strength at the unlock position for facilitating the removal of the device 1.
**FIG. 12** shows a means fore facilitating the removal of the device 1 when it is fastened on the metallic roof by powerful magnets 20. It is a screw plunger integrated in the device that allows the removal of the device without effort and without spoiling the paint. The screw plunger have advantageously a specific print 23 that requires for unfastening the device 1 the corresponding specific tool 24 having a high probability of uniqueness. The combination of powerful magnets and of an external shape of the device that offers no hold participates to the reduction of the risk of theft.

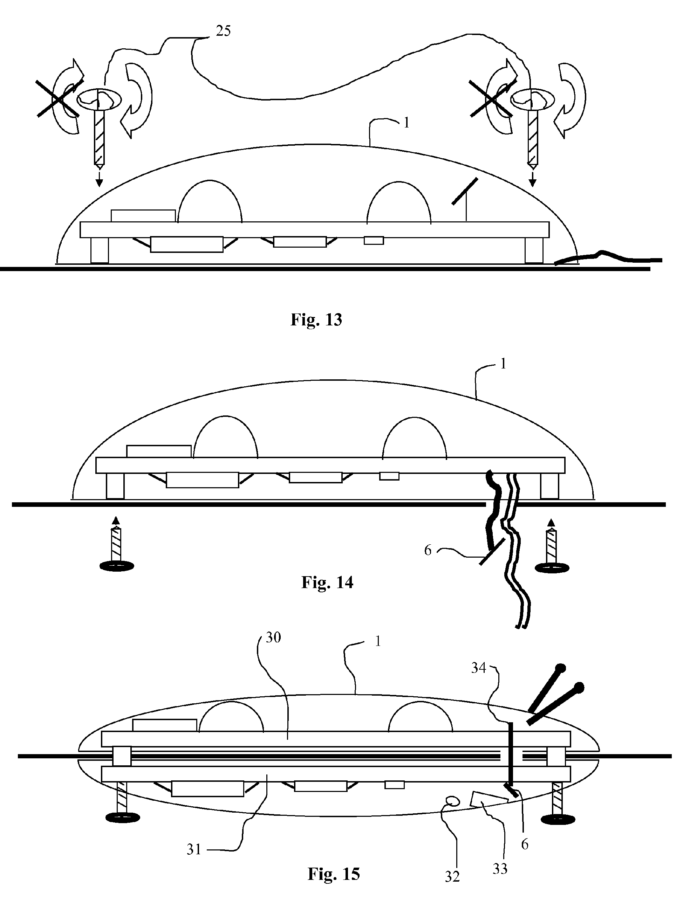

**FIG. 13** depicts means for securely fastening the device 1 with screws on the top. This variant is advantageous for not having to remove internal trim for installing the device of the invention. This characteristic simplifies the mounting of the device. Advantageously, the use of screws having an « unremovable » head 25 participates to the reduction of the risk of theft. The drilling of the roof can be done by the top but the risk of drilling the internal trim is advantageously reduced by the use by self drilling screws of an adapted length. The power supply cable is advantageously an adhesive flat ribbon cable that is stuck on the roof and goes inside the car for its connection at a door opening or through the gasket of a glass.
**FIG. 14** shows means for fastening securely the device 1 with screws screwed from below the roof. Accessing to the screw heads needing to enter in the car, standard screws suits at no risk of theft. A hole is needed for passing inside the car the power supply wires and advantageously also the antenna 6 that is associated to the short or medium range communication means. At least the hole for passing the cables is advantageously done right at the roof. Thus it gives an easy access to a 12VDC supply point. Advantageously, the combination of the fastening by the top of FIG. 13 with the drilling of a hole right at roof light location avoids the need to remove internal trim.
**FIG. 15** depicts a variant of implementation of the device of the invention 1 in which the main antenna subassembly 30 and the main electronics 31 are split respectively in one upper part placed on the roof and one lower part placed below the roof inside the car. Of course, any other arrangement of device subassemblies stays in the ambit of the invention. The lower part contains advantageously the said short or medium range communication means 6. Some variants provide user interface on the lower part of the device. This user interface can comprise a plurality of buttons 32, lights or a display 33. Connection means 34 allow the continuity of electrical signals between the upper and the lower parts of the device 1.

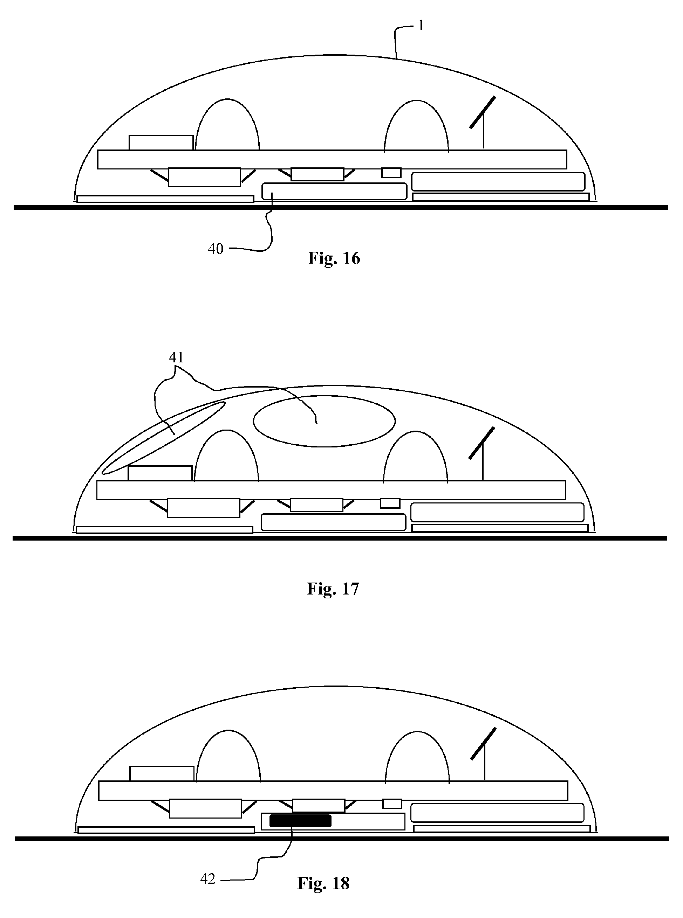

**FIG. 16** shows a variant of implementation of the device of the invention 1 that doesn't need any cable going inside the vehicle. This variant is autonomous and supplied by an embedded battery 40. The battery having to be charged before use, this variant suits very well to the removable magnetic fastening solutions described above.
**FIG. 17** shows an improvement of the prior battery based solution of FIG 16 by the addition of photovoltaic cells 41 that increases autonomy by at least a partial battery charging capability. Of course, photovoltaic cells need good solar illumination and stop producing energy at night.
**FIG. 18** depicts another solution for improving the autonomy of the battery based variant of FIG.16 by the addition of a kinetic generator 42. This type of generator is particularly productive in stop and go driving situation like in town.

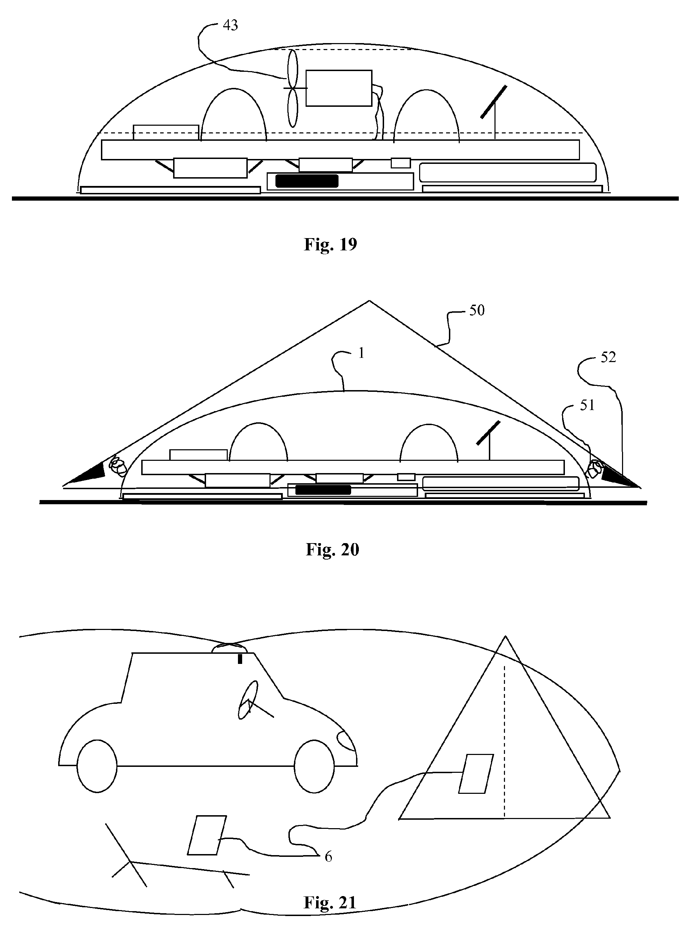

**FIG. 19** shows another improvement of the autonomy of the battery based variant of FIG. 16 by the addition of generator actuated by the energy of the wind 43. This type of generator is particularly productive in steady driving situation at high speed like on motorway. Of course, the best implementation combines generators of different types (ie. from FIG 17 to FIG 19) for being sure to charge the battery in most of the driving cases. This way, a fully autonomous and wireless variant of the device of the invention can be achieved.
**FIG. 20** shows an improvement of the device of the invention for automatically removing snow that could reduce the sensitivity of the signal reception. The snow made of water attenuates the reception of radio electric waves particularly in the 2 GHz range that correspond to the S band used for television. In this example, the device 1 is headed by a supplementary radome 50 of a form and a suitable surface to enhance non adherence of snow taking into account aerodynamics. An elastic suspension 51 combined with suspended mass 52 is shaken by any vehicle movements. This combination of static and dynamic mechanical characteristics removes automatically the snow falling over.
**FIG. 21** shows an outdoor application of the system according to the invention implemented in a car. It shows how the short range radio link may allow the service delivery nonetheless inside the car but also in its immediate vicinity on terminals 6 that are outside the vehicle. The location of the corresponding antenna on the roof of the car gives the best coverage of the outside area but it still works when the antenna is inside the car. This characteristic of the invention is particularly valuable for use during outdoor leisure.

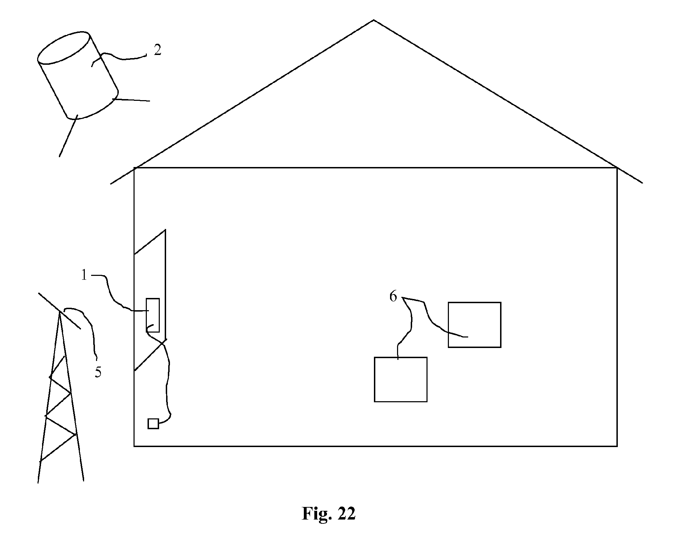

**FIG. 22** shows another application of the invention that aims to allow deep indoor reception of broadcasted services, particularly but not only, for satellite 2 and/or terrestrial 5 broadcasted services. The invention in this use case brings many advantages. It allows internal mobility by the use of at least one portable terminal 6 inside the house for all types of services like TV and/or radio reception, Internet browsing... Another important advantage is the fact that the invention allows satellite reception without the need of an external dish, all the hardware 1 according to the invention is potentially behind the window.

## Claims

1. A device for exploiting, through at least one terminal, at least one service in relation with information received, and in some cases transmitted, by radiofrequency that comprises:
- at least one means for receiving, and in some cases transmit, information by radiofrequency ; and
- at least one short or medium range wireless communication means; and
- one electronic subassembly comprising at least one microprocessor connected to the means above and to an electrical power source.

2. A device according to claim 1, wherein the at least one means for receiving, and possibly transmit, information by radiofrequency implement at least one diversity scheme.

3. A device according to claim 1 or 2, further comprising at least one conditional access means.

4. A device according to any one of the previous claims , wherein the at least one short or medium range wireless communication means transmit a plurality of structured information streams.

5. A device according to any one of the previous claims, wherein the at least one short or medium range wireless communication means transmit at least one information in relation with a plurality of possible choices, receives at least one command for selecting one choice among the plurality of possible choices and transmit a stream of structured information in relation with the choice done.

6. A device according to any one of the previous claims, further comprising:
- Means for achieving a transponder feature for sending information as an answer to a request, the said information comprising at least a unique code for identifying the device and if available, information for locating the device and/for identifying the real time and date of the exchange.

7. A device according to any one of the previous claims, further comprising:
- Means for directly or indirectly achieve a connection to a cellular network.

8. A system for exploiting, through at least one terminal, at least one service in relation with information received, and possibly transmitted, by radiofrequency that comprises:
- a device as recited in any one of claims 1 to 7; and
- at least one terminal capable of receiving, and in some cases for transmitting, information respectively from and to the device recited in any one of claims 1 to 7.

9. A method implemented by a system according to claim 8, for exploiting, through the at least one terminal of this system, at least one service in relation with information received, and possibly transmitted, by radiofrequency that comprises:
- a step of selection by the user of a service to be exploited among a plurality of services proposed through the at least one terminal ; and
- a step of delivery of the service chosen by the user.

10. A method according to claim 9, wherein the step of delivery of the service chosen by the user comprises:
- a sub-step of unitary stream extraction that corresponds to the selected service inside a multiplexed comprising other data in relation with at least one other service,
- a sub-step of exploitation of the data of the said unitary stream that correspond to the selected service inside the at least one terminal for providing the selected service.

11. A method according to claim 10, wherein the sub-step of said unitary stream extraction is executed inside the device according to any one of claims 1 to 7.

12. A method according to claim 10 or 11, wherein the sub-step of said unitary stream extraction is executed inside the at least one terminal.

13. Use of a system according to claim 8 for receiving digital television on at least one terminal inside and/or near a transportation means and/or a building.

14. Use of a system according to claim 8 for being connected to Internet on at least one terminal inside and/or near a transportation means and/or a building.

15. Use of a system according to claim 8 for vehicle specific services like toll payment, parking payment and/or access, antitheft, emergency call and/or information reception.
